# EUROPEAN PATENT SPECIFICATION

(11) **EP 0 689 508 B1**
(45) Date of publication and mention of the grant of the patent: **21.01.1998**
(21) Application number: 94911112.4
(22) Date of filing: 21.03.1994
(51) Int. Cl.: B60K 5/10, B60K 6/04, B61B 15/00

(54) **POWER UNIT FOR DUAL-MODE VEHICLE**
ANTRIEBSEINHEIT FÜR EIN FAHRZEUG MIT ZWEI BETRIEBSARTEN
UNITE MOTRICE POUR VEHICULE A DEUX MODES DE FONCTIONNEMENT

(30) Priority: 22.03.1993 DK 32093
(43) Date of publication of application: 03.01.1996
(73) Proprietor: JENSEN, Palle Rasmus, DK-1904 Frederiksberg C (DK)
(72) Inventor: JENSEN, Palle Rasmus, DK-1904 Frederiksberg C (DK)
(74) Representative: Lund, Preben
(86) International application number: DK9400114
(87) International publication number: WO9421479

(56) References cited:
- WO-A-91/18777
- WO-A-93/11016
- US-A- 3 225 704

## Description

### State of the art

The present invention refers to a power unit for a dual-mode vehicle as defined in the preamble of claim 1. Such a dual-mode vehicle is known from document WO 91/18777.

International patent application no. PCT/DK91/00146 (WO 91/18777) describes a transport system of the dual-mode type and with dual-mode vehicles which can drive on a triangular rail, separately or coupled, and as an individual electric car on an ordinary road.

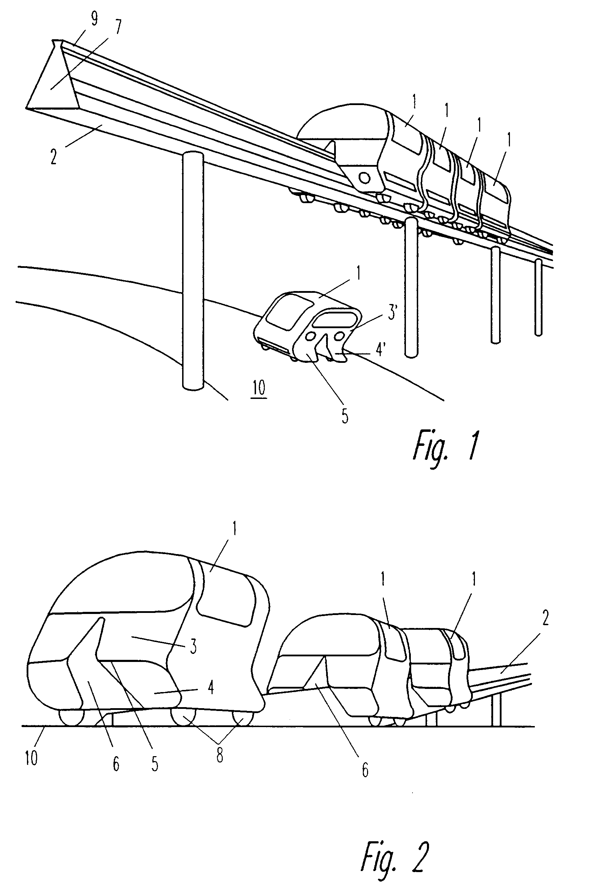

The main component of the transport system is the vehicle 1, which is shown in figs. 1 and 2 of the drawing, running either on a rail 2 of a triangular cross-sectional profile 7 and perhaps a particular brake rail 9 at the top of the rail 2. Each vehicle also has ordinary road wheels 8 for driving on a roadway 10.

Each vehicle 1 has a front end and a rear end where the front end has two substantially plane faces 3, 4 which meet at an angle along a horizontal line 5, and where the rear end has two substantially plane faces 3', 4' which likewise meet along a horizontal line 5, as shown, and otherwise as explained in the abovementioned international application.

Fig. 2 shows how the dual-mode vehicle 1 is transferred from rail driving, receiving current from the rail, to road driving on the roadway 10 as an independent electric vehicle on wheels 8 receiving current from conveyed batteries.

The vehicle is also provided with a downwardly facing groove 6 extending in the longitudinal direction and with a cross-sectional profile which substantially corresponds to the cross-sectional profile 7 of the rail 2.

The vehicle 1 and the design thereof as well as the rail 2 and the design thereof will not be further described in the present application, reference being made to the abovementioned international application.

When the vehicle 1 leaves the triangular rail, it will drive as an electric car with the inherent limited range or the capacity of the built-in battery/batteries. The range of such electric cars is of the order of 25-100 km dependent on the size of the batteries, the charging conditions thereof, the weight of the vehicle, road conditions etc.

### Advantages of the invention

By designing a power unit for a dual-mode vehicle of the kind described in the introduction to claim 1 and as disclosed in the characterising part of claim 1, there is achieved an increase in the range when the vehicle drives as an independent vehicle on an ordinary road.

The longitudinal groove in the lower part of the vehicle, which is only used when the vehicle drives on the triangular rail, is simply utilised. The range of the vehicle is thus increased without reducing the cabin space or any luggage space. The power unit is for example externally provided with electrical terminals arranged at the correct height for electrical connection with the sliding contacts or the like used by the vehicle for drawing current from the rail. The power unit may thus supply current to the vehicle and increase the range by the amount of energy supplied by the unit.

By designing the power unit according to the invention as disclosed in the characterising part of claim 2 or the characterising part of claim 3, it is possible to utilise the entire useful cavity of the groove in the vehicle without reducing the aerodynamic properties of the vehicle, without damaging the outer shape and design of the vehicle, and without the power unit in any way being in the way, neither by normal driving nor by controlled queue driving when the vehicles drive on the road in a line and closely behind each other.

The power unit according to the invention may be designed as disclosed in the characterising part of claim 4 in case the energy store does not contain energy of a type which can be directly used by the vehicle.

The power unit according to the invention may also by designed as disclosed in the characterising part of claim 5 such that it is simply a matter of an increase in the battery capacity of the dual-mode vehicle.

Finally, the power unit according to the invention may be designed as disclosed in the characterising part of claim 6, whereby there is achieved a particularly substantial increase in the range of the vehicle when it is away from the current supply of the rail, in that it is well-known that motor fuel has a very high degree of energy density and that the energy content of the motor fuel can be converted into electic current at a reasonable efficiency.

If the power unit is designed as disclosed in the characterising part of claim 7, optimum utilisation of the available space in the power unit is achieved and pollution etc. from the combustion engine is minimised.

### The drawings

The invention will now be further explained with reference to the drawing wherein
- fig. 1: is a known dual-mode vehicle adapted as a rail vehicle as well as a road vehicle,
- fig. 2: is the vehicle in fig. 1 during the transitional phase from rail driving to road driving,
- fig. 3a,b: is the principle of the connection of a dual-mode vehicle with a power unit according to the invention,
- fig. 4: schematically shows the power unit according to an embodiment of the invention, and
- fig. 5: is a plane section V-V in fig. 3a in an empty power unit.

### Explanation of the embodiment

Figs. 1 and 2 of the drawing showing a dual-mode transport system are explained above and will not be further mentioned in this context.

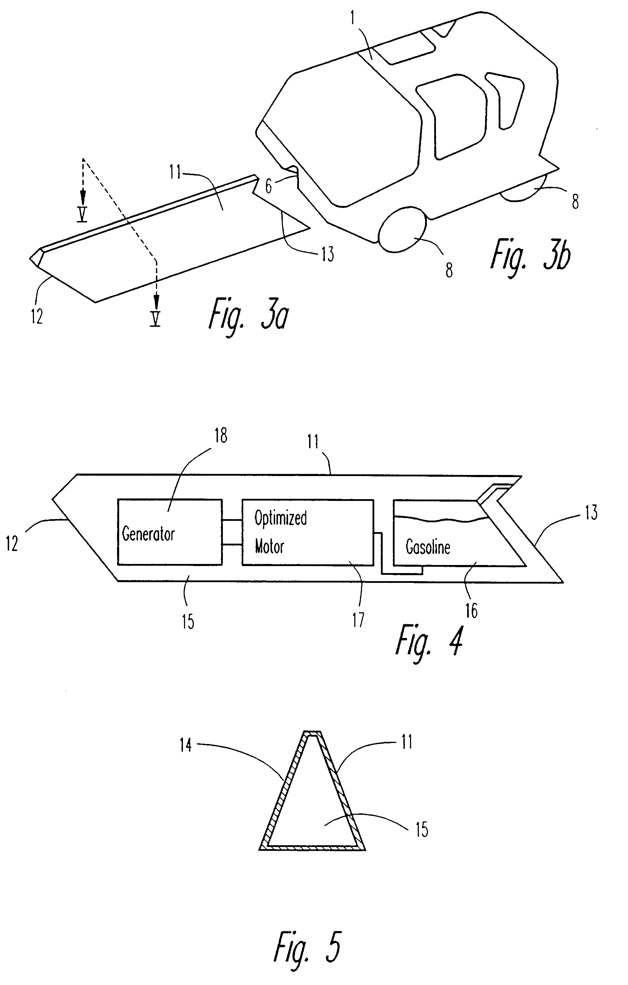

In figs. 3a,b the dual-mode vehicle 1 is shown driving on a roadway, ie. as an ordinary electric car. The vehicle 1 has a triangular groove 6 with its point in an upwards direction and widening downwards as shown in connection with figs. 1 and 2. When the vehicle 1 is not driving on its triangular rail, the mentioned triangular groove may be used for connecting the power unit 11. The power unit 11 is in a generally known manner mechanically connected under the vehicle 1, so that it will substantially fill the triangular groove 6 and such that the power unit is fixedly and immovably retained. The power unit 11 may have a front end 12 and a rear end 13 which designwise correspond to the front end and rear end of the vehicle 1.

The cross-sectional profile of the power unit 11 is shown in fig. 5 and may comprise a unit built up by sheet walls 14 enclosing an elongate hollow space 15. The power unit 11 is preferably designed in such a manner that it substantially fills the triangular groove in the vehicle 1 so that maximum increase of the range of the vehicle is achieved and has externally not shown electrical terminals or the like for electrical connection with the vehicle 1, preferably connection with the existing sliding contacts adapted for drawing current from the driving rail.

In an embodiment of the invention, which is schematically shown in fig. 4, the hollow space 15 of the power unit 11 holds a fuel tank 16 for motor fuel, for example gasoline or Diesel oil, for a combustion engine 17 powering a generator 18 for generating electric current. The combustion engine 17 is preferably optimised in relation to efficiency and pollution, for example by being controlled for driving at a constant, optimum number of revolutions. If the current from the generator 15 is conducted in parallel over the battery of the vehicle, the generator will only have to supply the average consumption, which means that the engine and the generator may be less powerful than required for supplying the maximum consumption since current peaks etc. are supplied by the battery.

Even if fig. 4 shows the currently preferable embodiment of the invention because it may provide a relatively substantial increase in the range of the vehicle outside the rail, it is obvious to a person skilled in the art that the power unit may be designed in many other ways. The power unit may in a simple embodiment merely be an additional battery, but may in a more complicated embodiment by a hydrogen engine powered by a hydrogen store which has for example been filled up by applying non-polluting energy such as wind energy, wave energy, solar energy etc.

The energy store in the power unit according to the invention may also be based on the application of fuel cells or similar technology so that it is possible to provide electricity without using a combustion engine.

## Claims

1. Power unit (11) for a dual-mode vehicle (1), for example an electric car which can both operate on built-in batteries and be supplied with current through a running rail or the like, said vehicle (1) moreover comprising road wheels (8) for driving on a roadway (10) or the like as well as driving means for driving on a rail (2) having a substantially triangular cross-sectional profile (7), the upper part of which is facing upwards, the vehicle (1) having a downwardly facing groove (6) extending in the longitudinal direction of the vehicle (1), said groove (6) having a cross-sectional profile which substantially corresponds to the cross-sectional profile of the rail (2), **characterised in** that the power unit (11) is designed to form an elongate unit having an outer cross-sectional profile (14) substantially corresponding to the cross-sectional profile of the groove (6), and is suited to be moved into the groove (6) when the vehicle (1) is transferred from the rail driving mode to the road driving mode, that the vehicle (1) and the unit (11) comprise means for firmly connecting the unit in the groove (6) of the vehicle, that the unit (11) comprises an energy store and that the unit (11) comprises means for establishing transmission of electric current from the energy store to the vehicle (1).

2. Power unit (11) according to claim 1, **characterised in** that the length thereof substantially corresponds to the length of the vehicle (1).

3. Power unit according to claim 1 or 2, **characterized in** that it has a front end (12) and a rear end (13) either of which has an outer shape corresponding to the outer shape of the vehicle at its front end and its rear end, respectively.

4. Power unit according to any one of claims 1-3, **characterised in** that it further comprises means for converting the energy in the energy store into electric current for transmission to the vehicle (1).

5. Power unit according to any one of claims 1-4, **characterised in** that it comprises at least one battery.

6. Power unit according to any one of claims 1-4, **characterised in** that the energy store is a motor fuel tank (16) and that the means for energy conversion comprises a combustion engine (17) and a generator for electric current (18).

7. Power unit according to claim 6, **characterised in** that the combustion engine (17) is optimised in relation to number of revolutions, fuel economy and exhaust gas purity and that the current from the generator (18) is supplied to the vehicle (1) in parallel over its own battery.

## Patentansprüche

1. Energieversorgungseinheit (11) für ein Doppel-Betriebsart-Fahrzeug (1), beispielsweise ein elektrisches Fahrzeug, das sowohl auf Grundlage eingebauter Batterien als auch durch Strom betreibbar ist, der durch eine Fahrschiene oder dergleichen zugeführt wird, wobei das Fahrzeug (1) außerdem Straßenräder (8) zum Fahren auf einer Straße (10) oder dergleichen ebenso wie Antriebsmittel zum Fahren auf einer Schiene (2) aufweist, die im wesentlichen ein dreieckiges Querschnittsprofil (7) haben, dessen oberer Teil aufwärts weist, wobei das Fahrzeug (1) eine abwärts weisende Nut (6) aufweist, die sich in der Längsrichtung des Fahrzeugs (1) erstreckt, wobei die Nut (6) ein Querschnittsprofil hat, das im wesentlichen dem Querschnittsprofil der Schiene (2) entspricht, **dadurch gekennzeichnet**, daß die Energieversorgungseinheit (11) dazu ausgelegt ist, eine längliche Einheit mit einem äußeren Querschnittsprofil (14) entsprechend dem Querschnittsprofil der Nut (6) zu bilden, und geeignet ist, in der Nut (6) bewegt zu werden, wenn das Fahrzeug (1) von der Schienenfahrbetriebsart in die Straßenfahrbetriebsart überführt wird, daß das Fahrzeug (1) und die Einheit (11) Mittel zum festen Verbinden der Einheit in der Nut (6) des Fahrzeugs aufweist, daß die Einheit (11) einen Energiespeicher aufweist, und daß die Einheit (11) Mittel zum Festlegen einer Übertragung von elektrischem Strom von dem Energiespeicher zu dem Fahrzeug (1) aufweist.

2. Energieversorgungseinheit (11) nach Anspruch 1, **dadurch gekennzeichnet**, daß ihre Länge im wesentlichen der Länge des Fahrzeugs (1) entspricht.

3. Energieversorgungseinheit nach Anspruch 1 oder 2, **dadurch gekennzeichnet**, daß sie ein Vorderende (12) und ein hinteres Ende (13) aufweist, die jeweils eine äußere Form entsprechend der äußeren Form des Fahrzeugs an seinem Vorderende bzw. seinem hinteren Ende aufweist.

4. Energieversorgungseinheit nach einem der Ansprüche 1 bis 3, **dadurch gekennzeichnet**, daß sie Mittel zum Wandeln der Energie in dem Energiespeicher in elektrischen Strom zur Übertragung zu dem Fahrzeug (1) aufweist.

5. Energieversorgungseinheit nach einem der Ansprüche 1 bis 4, **dadurch gekennzeichnet**, daß sie zumindest eine Batterie aufweist.

6. Energieversorgungseinheit nach einem der Ansprüche 1 bis 4, **dadurch gekennzeichnet**, daß der Energiespeicher ein Motorkraftstofftank (16) ist, und daß das Mittel zur Energiewandlung einen Verbrennungsmotor (17) und einen Generator für elektrischen Strom (18) aufweist.

7. Energieversorgungseinheit nach Anspruch 6, **dadurch gekennzeichnet**, daß der Verbrennungsmotor (17) in bezug auf die Drehzahl, den Kraftstoffverbrauch und die Abgasreinheit optimiert ist, und daß der Strom von dem Generator (18) dem Fahrzeug (1) parallel über seine eigene Batterie zugeführt wird.

## Revendications

1. Unité motrice (11) pour véhicule (1) à deux modes de fonctionnement, par exemple une voiture électrique qui peut fonctionner à la fois au moyen de batteries incorporées et peut être alimentée en courant par l'intermédiaire d'un rail courant ou analogue, ledit véhicule (1) comportant en outre des roues (8) permettant au véhicule de se déplacer sur une route (10) ou analogue aussi bien que des moyens d'entraînement pour entraîner le véhicule sur un rail (2) présentant un profil (7) ayant en coupe transversale une section sensiblement triangulaire, et dont la partie supérieure est dirigée vers le haut, le véhicule (1) comprenant une gorge (6) dirigée vers le bas, qui s'étend dans la direction longitudinale du véhicule (1), ladite gorge (6) présentant un profil en section transversale correspondant sensiblement au profil en section transversale du rail (2), ladite unité motrice étant caractérisée en ce qu'elle est conçue de façon à former une unité allongée présentant un profil en coupe transversale extérieure (14) correspondant sensiblement au profil en section transversale de la gorge (6), et qu'elle est conformée de façon à se déplacer à l'intérieur de la gorge (6) lorsque le véhicule (1) passe du mode d'entraînement sur le rail au mode d'entraînement sur route, en ce que le véhicule (1) et l'unité (11) comprennent des moyens pour relier fermement l'unité dans la gorge (6) du véhicule, que l'unité (11) comprend une source d'énergie, et que l'unité (11) comprend des moyens pour établir une transmission de courant électrique au véhicule (1) en provenance de la source d'énergie.

2. Unité de puissance (11) selon la revendication 1, caractérisée en ce que sa longueur correspond sensiblement à la longueur du véhicule (1).

3. Unité de puissance selon la revendication 1 ou 2, caractérisée en ce qu'elle comporte une extrémité frontale (12) et une extrémité arrière (13), l'une ou l'autre d'entre elles présentant une forme extérieure correspondant à la forme extérieure du véhicule à son extrémité frontale et à son extrémité arrière, respectivement.

4. Unité de puissance selon l'une quelconque des revendications 1 à 3, caractérisée en ce qu'elle comprend en outre des moyens pour convertir l'énergie de la source d'énergie en courant électrique destiné à être transmis au véhicule (1).

5. Unité de puissance selon l'une quelconque des revendications 1 à 4, caractérisée en ce qu'elle comprend au moins une batterie.

6. Unité de puissance selon l'une quelconque des revendications 1 à 4, caractérisée en ce que la source d'énergie est constituée par un réservoir (16) de combustible moteur et que les moyens de conversion d'énergie comprennent un moteur à combustion (17) et un générateur de courant électrique (18).

7. Unité de puissance selon la revendication 6, caractérisée en ce que le moteur à combustion (17) est optimisé en ce qui concerne sa vitesse de révolutions, l'économie de combustible et la propreté des gaz d'échappement et en ce que le courant provenant du générateur (18) est fourni au véhicule (1) en parallèle avec sa propre batterie.
